# EUROPÄISCHE PATENTANMELDUNG

(11) **EP 3 686 504 A1**
(43) Veröffentlichungstag der Anmeldung: **29.07.2020**
(21) Anmeldenummer: 19199674.3
(22) Anmeldetag: 25.09.2019
(51) Int. Cl.: F24F 13/06, F24F 13/08, F24F 13/18, F16L 9/00, F24F 13/072, F24F 7/00

(54) **LUFTAUSLASS SOWIE WAND UND OFEN MIT EINEM SOLCHEN LUFTAUSLASS**

(30) Priorität: 25.01.2019 DE 202019100470 U
(71) Anmelder: De Zuylenkamp B.V., 7003 BW Doetinchem (NL)
(72) Erfinder: van Deijk, Jurg, 7003BW Doetinchem (NL)
(74) Vertreter: Riechelmann & Carlsohn Patentanwälte PartG mbB

(57) **Zusammenfassung**

Die Erfindung betrifft einen Luftauslass, insbesondere zur Anbringung an einer Wandöffnung oder Ausnehmung, beispielsweise an einer Wandöffnung oder Ausnehmung einer Heizvorrichtung wie eines Ofens. Dabei ist vorgesehen, dass der Luftauslass Folgendes aufweist: eine Vorderwand (2), eine Rückwand (3), einen Boden (4) und eine Decke (5), die einen Innenraum (6) begrenzen, wobei zwischen dem Boden (4) und der Rückwand (3) eine Lufteintrittsöffnung (21) ausgebildet ist und zwischen der Decke (5) und der Vorderwand (2) eine Luftaustrittsöffnung (22) ausgebildet ist, wobei der Abstand der Luftaustrittsöffnung (22) vom Boden (4) größer als die Ausdehnung der Lufteintrittsöffnung (21) vom Boden (4) in Richtung Decke (5) ist und wobei in dem Innenraum (6) ein Luftleitelement (7) zum Leiten der an der Lufteintrittsöffnung (21) eintretenden Luft zur Luftaustrittsöffnung (22) angeordnet ist.

## Beschreibung

Die Erfindung betrifft einen Luftauslass, insbesondere zur Anbringung an einer Wandöffnung oder Ausnehmung, beispielsweise an einer Wandöffnung oder Ausnehmung einer Heizvorrichtung wie eines Ofens. Sie betrifft ferner eine Wand, die einen solchen Luftauslass aufweist, und einen Ofen, der einen solchen Luftauslass aufweist.

Es sind Heizvorrichtungen, insbesondere Öfen, bekannt, in deren Wände Öffnungen eingebracht sind. Die Wandöffnungen können der Zufuhr von Luft aus der Umgebung in die Heizvorrichtung oder der Abfuhr von Luft aus der Heizvorrichtung dienen. Öfen können gemauerte Wände besitzen. Oberhalb des Brennraumes ist häufig eine Wandöffnung vorgesehen, durch die Luft, die im Ofen erwärmt worden ist, in die Umgebung - das ist in der Regel der Raum, in dem sich der Ofen befindet - austreten kann. Zur Abdeckung der Wandöffnungen sind Lüftungsgitter bekannt. Mittels der Lüftungsgitter wird zum einen die Wandöffnung gegen zweckfremde Eingriffe gesichert, zum anderen erlaubt das Lüftungsgitter auch eine Regelung der Wärmeabgabe an die Umgebung.

Aus DE 20 2010 001 764 U1 ist ein Lüftungsgitter bekannt, das an Maueröffnungen von Kaminöfen eingebracht werden kann. Das Lüftungsgitter weist einen Rahmen auf, in dem mittig eine Öffnung ausgebildet ist. Die Öffnung kann mit sechs parallel angeordneten, leistenförmigen Klappen verschlossen und geöffnet werden. Die Klappen können mittels eines Schwenkhebels derart verstellt werden, dass die Verstellung einer Klappe die Verstellung aller weiteren Klappen bewirkt. An der Rückseite des Rahmens sind Klemmen befestigt, die mittels Federn eine Klemmbefestigung des Lüftungsgitters in der Maueröffnung ermöglichen sollen. Außerdem verhindern die Klappen einen Durchgriff durch die Öffnung des Lüftungsgitters. Die Abdeckung einer Maueröffnung eines Kaminofens mit Lüftungsgittern, die leistenförmige Klappen aufweisen, wird heutigen ästhetischen Vorstellungen nicht oder zumindest nicht vollkommen gerecht. Zumindest die Klappen stehen über die Außenseite der Maueröffnung über.

Aufgabe der Erfindung ist es, die Nachteile nach dem Stand der Technik zu beseitigen. Es soll insbesondere ein Luftauslass angegeben werden, der von außen nur in geringem Maße sichtbar ist, ohne Klappen auskommt, und dennoch einen Durchgriff verhindert sowie gute Strömungseigenschaften hat.

Diese Aufgabe wird durch die Merkmale der Ansprüche 1, 14 und 15 gelöst. Zweckmäßige Ausgestaltungen der Erfindungen ergeben sich aus den Merkmalen der Unteransprüche.

Nach Maßgabe der Erfindung ist ein Luftauslass vorgesehen, der eine Vorderwand, eine Rückwand, einen Boden und eine Decke aufweist, die einen Innenraum begrenzen. Zwischen dem Boden und der Rückwand ist eine Lufteintrittsöffnung ausgebildet. Zwischen der Decke und der Vorderwand ist eine Luftaustrittsöffnung ausgebildet. Dabei ist der Abstand der Luftaustrittsöffnung vom Boden größer als die Ausdehnung der Lufteintrittsöffnung vom Boden in Richtung Decke. In dem Innenraum ist ein Luftleitelement zum Leiten der an der Lufteintrittsöffnung eintretenden Luft zur Luftaustrittsöffnung angeordnet.

In einer Ausführungsform des erfindungsgemäßen Luftauslasses bildet die Decke seine Oberseite und der Boden seine Unterseite. In einer anderen Ausführungsform bildet der Boden seine Oberseite und die Decke seine Unterseite.

Die Anordnung der beiden Öffnungen, d. h. der Lufteintrittsöffnung und der Luftaustrittsöffnung, verhindert einen Durchgriff durch den Innenraum. Lamellen oder ähnliche Einrichtungen sind daher nicht erforderlich. Das Luftleitelement leitet den Luftstrom, der an der Lufteintrittsöffnung in den Innenraum des Luftauslasses eintritt, zur Luftaustrittsöffnung. Es verhindert eine Stauung, Verwirbelung oder beides in den Innenraum eingetretenen Luftstromes an der Decke. Das Luftleitelement verhindert, dass Luft in die zwischen der Rückwand und der Decke ausgebildete Kante gelangt. Der erfindungsgemäße Luftauslass hat deshalb gute Strömungseigenschaften. Die Lufteintrittsöffnung kann sich über annähernd die gesamte Länge des Bodens erstrecken. Die Luftaustrittsöffnung kann sich über annähernd die gesamte Länge der Decke erstrecken. Vorzugsweise haben die Lufteintrittsöffnung und die Luftaustrittsöffnung die gleiche Länge. Es kann vorgesehen sein, dass der erfindungsgemäße Luftaustritt, abgesehen von der ersten Luftdurchtrittsöffnung und zweiten Luftdurchtrittsöffnung keine weiteren Öffnungen aufweist, die zu Durchtritt von Luft bestimmt sind und/oder den Durchtritt von Luft gestatten.

Das Luftleitelement kann ein Luftleitblech sein. Das Luftleitelement kann eine Vorderseite und eine Rückseite aufweisen, wobei es mit seiner Rückseite an der Rückwand und an der Decke anliegt. Die Vorderseite des Luftleitelementes kann gekrümmt sein. Vorteilhafterweise ist das Luftleitelement um einen Winkel von 90° gekrümmt. Es kann vorgesehen sein, dass die Vorderseite konkav gewölbt ist. Ist das Luftleitelement ein Luftleitblech, so kann das Luftleitblech gekrümmt sein. Vorteilhafterweise ist das Luftleitblech um einen Winkel von 90° gekrümmt.

Das Luftleitelement kann einen ersten Abschnitt, der mit seiner Rückseite ganz oder teilweise an der Decke anliegt, einen zweiten Abschnitt, der mit seiner Rückseite ganz oder teilweise an der Rückwand anliegt, und einen gekrümmten dritten Abschnitt, der den ersten Abschnitt mit dem zweiten Abschnitt verbindet, aufweisen. Der erste Abschnitt des Luftleitbleiches kann einen ersten Teilabschnitt und einen zweiten Teilabschnitt aufweisen, wobei der erste Teilabschnitt über die Decke hinaussteht und wobei der zweite Teilabschnitt mit seiner Rückseite an der Decke anliegt. Der zweite Teilabschnitt kann zwischen dem ersten Teilabschnitt und dem dritten Abschnitt liegen. Der zweite Abschnitt des Luftleitelementes kann eine Unterkante aufweisen, von der sich der zweite Abschnitt an der Rückwand in Richtung der Decke erstreckt, wobei die Unterkante von der Oberkante der Lufteintrittsöffnung und/oder der Unterkante der Rückwand beabstandet ist.

Zur weiteren Verbesserung des Strömungsverhaltens der Luft, die an der Lufteintrittsöffnung (21) in dem Innenraum (6) eintritt und zur Luftaustrittsöffnung (22) geleitet wird, ist ein weiteres Luftleitelement (30) angeordnet, das eine Vorderseite (30a) und eine Rückseite (30b) aufweist, wobei es mit seiner Rückseite (30b) an der Vorderwand (2) und am Boden (4) anliegt. Vorteilhafterweise ist das Luftleitelement um einen Winkel von 90° gekrümmt. Es kann vorgesehen sein, dass die Vorderseite konvex gewölbt ist.

An der Oberkante der Vorderwand kann ein erster Steg ausgebildet sein, der sich vom Innenraum weg erstreckt. An der Unterkante der Vorderwand kann ein zweiter Steg ausgebildet sein, der sich vom Innenraum weg erstreckt. Der erste Steg und der zweite Steg können einen putzhaltenden Bereich begrenzen, der an der Vorderwand, die dem Innenraum abgewandt ist, ausgebildet ist.

Der erfindungsgemäße Luftauslass kann an einer oder mehreren seiner Außenseiten einen putzhaltenden Bereich aufweisen. Vorzugsweise weist die Außenseite der Vorderwand, die dem Innenraum abgewandt ist, einen putzhaltenden Bereich auf. Wie bereits beschrieben, können der erste Steg und der zweite Steg den putzhaltenden Bereich begrenzen. Der erste Steg kann ein horizontal verlaufender Steg sein. Der zweite Steg kann ein horizontal verlaufender Steg sein.

Weist eine Außenseite einen putzhaltenden Bereich auf, so kann im putzhaltenden Bereich ein putzhaltendes Material aufgebracht sein. Beispielsweise kann auf die Außenseite der Vorderwand im putzhaltenden Bereich ein putzhaltendes Material aufgebracht sein. Das putzhaltende Material soll das Aufbringen einer Putzschicht auf die Außenseite erleichtern. Es soll alternativ oder zusätzlich die Anhaftung des Putzes an der Außenseite verbessern, so dass die Putzschicht dauerhaft an der Vorderwand haften bleibt. Bei dem putzhaltenden Material kann es sich beispielsweise um ein Putzträgergewebe handeln. Bei dem Putzträgergewebe kann es sich beispielsweise um ein Streckmetallgeflecht, ein Glasfasergewebe, ein Drahtgeflecht oder ein Metallgitter handeln, wobei ein Streckmetallgeflecht bevorzugt ist. Das putzhaltende Material kann in Form einer putzhaltenden Lage auf die Außenseite aufgebracht sein. Die Außenseite der Vorderwand kann alternativ oder zusätzlich zu dem putzhaltenden Material mit einem Pulverlack beschichtet sein.

Der erfindungsgemäße Luftauslass kann an einer oder mehreren seiner Außenseiten eine Putzschicht aufweisen. Vorzugsweise weist die Außenseite der Vorderwand, die dem Innenraum abgewandt ist, eine Putzschicht auf. Die Putzschicht kann auf den putzhaltenden Bereich aufgebracht sein. Die Putzschicht kann auf das putzhaltende Material aufgebracht sein. Die Putzschicht kann fluchtend zum ersten Steg und/oder zum zweiten Steg, bevorzugt zu beiden, ausgebildet sein. Ist eine Putzschicht auf die Außenseite der Vorderwand aufgetragen, so ist der erfindungsgemäße Luftauslass von außen nur in geringem Maße sichtbar. Es ist kein Einbaurahmen sichtbar, der im Stand der Technik die Luftdurchtrittsöffnung auch nach dem Einbau in eine Wandöffnung oder Ausnehmung in einer Wand erkennbar umgibt.

Die Hinterkante der Decke kann in Richtung der Vorderwand versetzt zur Hinterkante des Bodens ausgebildet sein. Dabei kann die Lufteintrittsöffnung nach oben durch einen dritten Steg begrenzt sein, der sich von der Oberkante der Lufteintrittsöffnung bis zur Unterkante der Rückwand erstreckt. Die Oberkante der Lufteintrittsöffnung verläuft vorzugsweise fluchtend zur Hinterkante des Bodes. Der dritte Steg kann ein horizontal verlaufender Steg sein.

An der Lufteintrittsöffnung können Versteifungselemente ausgebildet sein. Die Versteifungselemente können sich von der Unterkante der Lufteintrittsöffnung zu deren Oberkante erstrecken. Sie können sich vom Boden zum dritten Steg erstrecken. Bei den Versteifungselementen kann es sich beispielsweise um Streben handeln. Die Streben können vertikal verlaufende Streben sein.

Der erfindungsgemäße Luftauslass kann Seitenwände aufweisen. Die Seitenwände können jeweils eine Hinterkante aufweisen, die die Lufteintrittsöffnung begrenzt, und eine Vorderkante, die die Luftaustrittsöffnung begrenzt. Die Seitenwände können ferner eine Unterkante aufweisen, die an den Boden angrenzt. Sie können ferner eine Oberkante aufweisen, die an die Decke angrenzt.

Der erfindungsgemäße Luftauslass kann einen Rahmen mit einer Rahmenöffnung aufweisen. Der Rahmen kann den Einbau des erfindungsgemäßen Luftauslasses in eine Wand vereinfachen. Die Rahmenöffnung weist einen Rand auf. Der Rand kann an der Decke, dem Boden und, wenn vorhanden, den beiden Seitenwänden anliegen. Die Rahmenöffnung ist dabei vollständig ausgefüllt. Zwischen der Außenseite der Decke und dem Rand der Rahmenöffnung, zwischen der Außenseite des Bodens und, wenn Seitenwände vorhanden sind, zwischen den Außenseiten der beiden Seitenwände sind keine Öffnungen oder Durchlässe ausgebildet. Der Rand liegt an den Außenseiten dicht an. Der Rahmen kann Rahmenwandungen aufweisen, die an der Decke, dem Boden und, wenn vorhanden, den Seitenwänden anliegen. Der Rahmen kann ferner Rahmenstege aufweisen, die von den Rahmenwandungen orthogonal abstehen. Der Rahmen kann zur Tiefenrichtung der Decke, des Bodens und, wenn vorhanden, den Seitenwänden verschiebbar sein. Der Rahmen kann Löcher aufweisen, über die der Rahmen mit der Wand verschraubt werden kann. Alternativ kann der Rahmen eingeklebt oder eingeputzt werden. Der Rahmen kann die Stabilität des erfindungsgemäßen Luftauslasses weiter erhöhen. Er vereinfacht ferner die Montage des erfindungsgemäßen Luftauslasses, beispielsweise an einer Wandöffnung oder an einer Ausnehmung in einer Wand. Der Rahmen kann beispielsweise an der Innen- oder Außenseite einer Wand, beispielsweise einer Ofenwand, eingesetzt werden. Er kann dann eingeklebt oder verputzt werden.

In einer weiteren bevorzugten Ausführungsform weist der erfindungsgemäße Luftauslass am Boden und/oder an der Decke Winkelelemente 40 zum Einbau in einer Wandöffnung oder einer Ausnehmung in einer Wand auf. Die Winkelelemente können mit einem Schenkel an den Boden und/oder die Decke angeschweißt, angeklebt oder auch geschraubt sein. Vorzugsweise sind sie angeschraubt. Dabei hat es sich als besonders vorteilhaft erwiesen, die Winkelelemente mittels Langlöchern mit dem Boden und/oder der Decke des Luftauslasses zu verschrauben. Dadurch wird die Montage des erfindungsgemäßen Luftauslasses an einer Wandöffnung oder an einer Ausnehmung in einer Wand weiter vereinfacht, da die Langlöcher eine leichte Anpassung an die jeweiligen Wandstärken und/oder eventuelle Unebenheiten der Wand erlauben. Die Winkelelemente können an der Innenseite oder der Außenseite einer Wand, beispielsweise einer Ofenwand, eingebaut werden. Mit dem jeweiligen anderen Schenkel werden die Winkelelemente dann mit der Wand verklebt, verputzt oder verschraubt. Es hat sich als besonders vorteilhaft erwiesen, auch den weiteren Schenkel der Winkelelemente mit Langlöchern zu versehen, um den Einbau weiter zu erleichtern.

Der Boden, die Decke, die Rückwand, die Vorderwand und, falls vorhanden, die Seitenwände bestehen bevorzugt aus einem Metall wie beispielsweise Stahl. Sie können aus Stahlblech bestehen. Ebenso bestehen der ersten, zweite und dritte Steg bevorzugt aus einem Metall wie beispielsweise Stahl. Sie können aus Stahlblech bestehen. Das Luftleitelement besteht bevorzugt aus einem Metall wie beispielsweise Stahl. Es kann aus Stahlblech bestehen. Der Rahmen besteht bevorzugt aus einem Metall wie beispielsweise Stahl. Der Rahmen kann aus Lochblech gebildet sein.

Die Vorderwand ist vorzugsweise am Boden und der Decke jeweils über eine unlösbare Verbindung befestigt. Falls Seitenwände vorhanden sind, kann die Vorderwand zusätzlich an Seitenwänden jeweils über eine unlösbare Verbindung befestigt sein. Auf diese Weise kann sichergestellt werden, dass die Vorderwand nicht von dem Boden, der Decke und, falls vorhanden, den Seitenwänden abgenommen werden kann. Die Vorderwand ist nach Einbau des Luftauslasses nicht einzeln ab- und/oder herausnehmbar.

Die Rückwand ist vorzugsweise am Boden und der Decke jeweils über eine unlösbare Verbindung befestigt. Falls Seitenwände vorhanden sind, kann die Rückwand zusätzlich an Seitenwänden jeweils über eine unlösbare Verbindung befestigt sein.

An oder oberhalb der Oberkante der Lufteintrittsöffnung und/oder an der oder oberhalb der Unterkante der Rückwand kann ein Steg angeordnet sein, der sich in den Innenraum erstreckt. Der Steg dient als Sichtschutz, der einen Blick von der Luftaustrittsöffnung durch die Lufteintrittsöffnung selbst dann verhindert, wenn ein Betrachter einen ungewöhnlichen Blickwinkel, beispielsweise einen extrem spitzen Blickwinkel von schräg oben auf den erfindungsgemäßen Luftauslass wählt. Die der Decke zugewandte Oberseite des Steges kann mit einer Lackschicht, beispielsweise einer Pulverlackschicht beschichtet sein. Der Sichtschutz kann sich über die gesamte Länge der Oberkante der Lufteintrittsöffnung erstrecken.

An der Oberkante und/oder an der Unterkante der Lufteintrittsöffnung können Schienen, Laschen oder Abkantungen ausgebildet sein, die den Anschluss eines Stutzens oder einen Adapters für einen Stutzen ermöglichen. Bei dem Stutzen kann es sich um einen Lüftungsstutzen handeln.

Die Innenseiten der Decke und/oder der Rückwand können mit einer Lackschicht, beispielsweise einer Pulverlackschicht beschichtet sein. Ebenso können die Innenseiten der Seitenwände mit einer Lackschicht, beispielsweise einer Pulverlackschicht beschichtet sein.

Der erfindungsgemäße Luftauslass kann eine annähernd rechteckige, beispielsweise eine annähernd quaderförmige Grundform aufweisen.

Nach Maßgabe der Erfindung ist ferner eine Wand vorgesehen, die eine Wandöffnung oder eine Ausnehmung aufweist und einen erfindungsgemäßen Luftauslass aufweist. Dabei ist der Luftauslass in der Wandöffnung oder der Ausnehmung angeordnet. Der Luftauslass ist in der Wandöffnung oder der Ausnehmung vorzugsweise derart angeordnet, dass die Vorderwand bündig mit der Außenseite der Wand abschließt. Weist der Luftauslass einen ersten und einen zweiten Steg auf, so ist der Luftauslass in der Wandöffnung oder der Ausnehmung vorzugsweise derart angeordnet, dass der erste und/oder der zweite Steg, bevorzugt beide, bündig mit der Außenseite der Wand abschließen. Bei der Wand kann es sich um eine Mauer handeln. Die Möglichkeit, eine Putzschicht auf die dem Raum zugewandte Außenseite der Vorderwand aufzutragen, ermöglicht eine Anpassung des Luftauslasses an die Gestaltung der Wand. Beim Blick auf die Seite der Wand, in die der Luftauslass derart eingesetzt ist, dass die Außenseite der Vorderwand des Luftauslasses sich an dieser Seite befindet, ist dann nur die Luftaustrittsöffnung sichtbar.

Der erfindungsgemäße Luftauslass kann an einer Kante, beispielsweise einer Oberkante oder einer Unterkante, einer Wand angeordnet sein. Er kann eine Kante, beispielsweise eine Oberkante oder eine Unterkante einer Wand, bilden. Der erfindungsgemäße Luftauslass kann oben oder/und unten in einen Ofen eingebaut werden.

Nach Maßgabe der Erfindung ist außerdem eine Heizvorrichtung vorgesehen, die eine Wand mit einer Wandöffnung oder einer Ausnehmung aufweist und die den erfindungsgemäßen Luftauslass aufweist. Der Luftauslass ist in der Wandöffnung oder der Ausnehmung angeordnet. Bei der Heizvorrichtung handelt es sich vorzugsweise um einen Ofen. Der erfindungsgemäße Luftauslass kann in die Wandöffnung oder die Ausnehmung derart eingesetzt sein, die sie einen Austritt von Warmluft aus dem Ofen ermöglicht. Bei der Wand kann es sich um eine Mauer handeln. Mittels des erfindungsgemäßen Luftauslasses kann in dem Ofen erhaltene Warmluft nach außengeführt werden. Die Warmluft tritt an der Lufteintrittsöffnung in den Innenraum des Luftauslasses ein und wird dort zur Luftauslassöffnung geführt, aus der sie in einen an die Wand angrenzenden Raum eintreten kann. Die Vorderwand des Luftauslasses ist diesem Raum zugewandt. Die Möglichkeit, eine Putzschicht auf die dem Raum zugewandte Außenseite der Vorderwand aufzutragen, ermöglicht eine Anpassung des Luftauslasses an die Gestaltung der Wand. Beim Blick auf die Außenseite der Wand, die dem Ofen ab und dem Raum zugewandt ist, ist dann nur die Luftaustrittsöffnung sichtbar.

Der erfindungsgemäße Luftauslass kann an einer Kante, beispielsweise einer Oberkante oder einer Unterkante, einer Wand angeordnet sein. Er kann eine Kante, beispielsweise eine Oberkante oder eine Unterkante einer Wand, bilden. Der erfindungsgemäße Luftauslass kann oben oder/und unten in einen Ofen eingebaut werden.

Der erfindungsgemäße Luftauslass kann jedoch auch für andere Zwecke eingesetzt werden. Er kann an Wandöffnungen angebracht werden, die der Luftzufuhr, der Luftabfuhr oder beidem dienen. Beispielsweise kann der erfindungsgemäße Luftauslass an einer Wandöffnung von Kanälen angebracht werden, die einem Raum Frischluft, Warmluft oder Kaltluft zuführen sollen oder Luft aus dem Raum abführen sollen.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine perspektivische Darstellung einer ersten Ausführungsform eines erfindungsgemäßen Luftauslasses mit Blick auf dessen Vorderseite;
- Fig. 2: eine perspektivische Darstellung der ersten Ausführungsform mit Blick auf dessen Rückseite;
- Fig. 3a: eine Schnittdarstellung der ersten Ausführungsform, geschnitten entlang Schnittlinie A--A;
- Fig. 3b: eine Schnittdarstellung nur des Luftleitelementes von Fig. 3a;
- Fig. 4: eine Detailansicht von Detail B von Fig. 2;
- Fig. 5: eine perspektivische Darstellung der ersten Ausführungsform eines erfindungsgemäßen Luftauslasses mit Blick auf dessen Vorderseite, wobei der Luftauslass in einer Wand eingesetzt ist;
- Fig. 6: eine vereinfachte Schnittdarstellung einer zweiten Ausführungsform, die zusätzlich einen Sichtschutz aufweist;
- Fig. 7: eine perspektivische Darstellung einer dritten Ausführungsform eines erfindungsgemäßen Luftauslasses mit Blick auf dessen Vorderseite;
- Fig. 8: eine perspektivische Darstellung der dritten Ausführungsform eines erfindungsgemäßen Luftauslasses mit Blick auf dessen Rückseite;
- Fig. 9: eine perspektivische Darstellung einer vierten Ausführungsform eines erfindungsgemäßen Luftauslasses mit Blick auf dessen Vorderseite;
- Fig. 10: eine Schnittdarstellung einer fünften Ausführungsform eines erfindungsgemäßen Luftauslasses mit Blick auf dessen Vorderseite;
- Fig. 11: eine Schnittdarstellung einer sechsten Ausführungsform eines erfindungsgemäßen Luftauslasses mit Blick auf dessen Vorderseite; und
- Fig. 12: eine Schnittdarstellung einer siebenten Ausführungsform, geschnitten entlang Schnittlinie A--A.

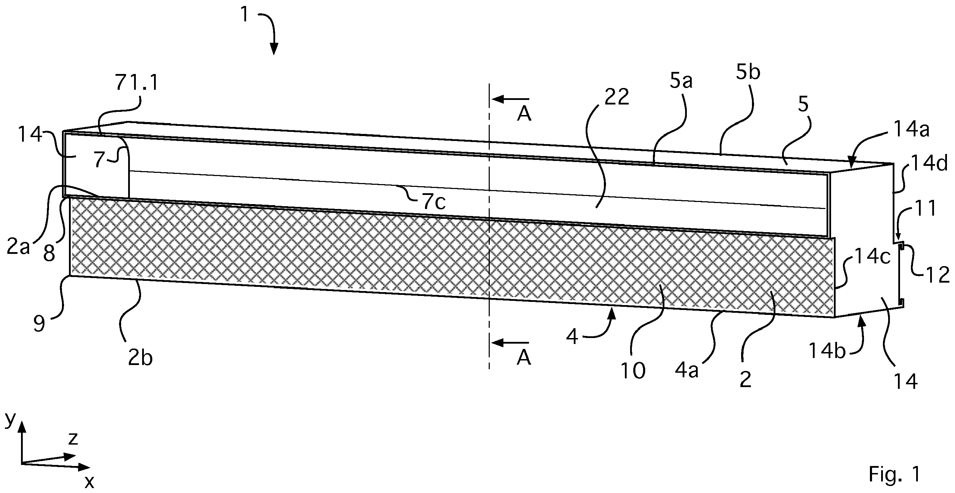

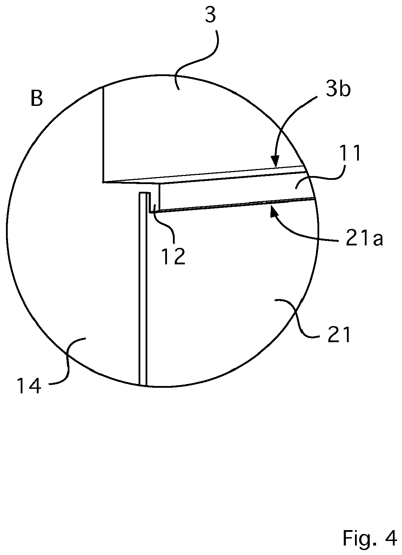

Die in den Figuren 1 bis 5 gezeigte erste Ausführungsform eines erfindungsgemäßen Luftauslasses 1 weist eine Vorderwand 2, eine Rückwand 3, einen Boden 4 und eine Decke 5 auf. Die Vorderwand 2, die Rückwand 3, der Boden 4 und die Decke 5 begrenzen einen Innenraum 6. Dabei sind die Innenseiten der Vorderwand 2, der Rückwand 3, des Bodens 4 und der Decke 5 dem Innenraum zugewandt, ihre Außenseiten sind dem Innenraum abgewandt. Die Vorderwand 2, die Rückwand 3, der Boden 4 und die Decke 5 sind beispielsweise jeweils Platten oder Bleche.

Die Ausdehnung des Luftauslasses 1 in Richtung der Koordinate x wird als Länge, die Ausdehnung des Luftauslasses 1 in Richtung der Koordinate y wird als Höhe und die Ausdehnung des Luftauslasses 1 in Richtung der Koordinate z wird als Tiefe bezeichnet. In der gezeigten Ausführungsform erstrecken sich der Boden 4 und die Decke 5 in der Horizontalen, während die Vorderwand 2 und die Rückwand 3 sich in der Vertikalen erstrecken.

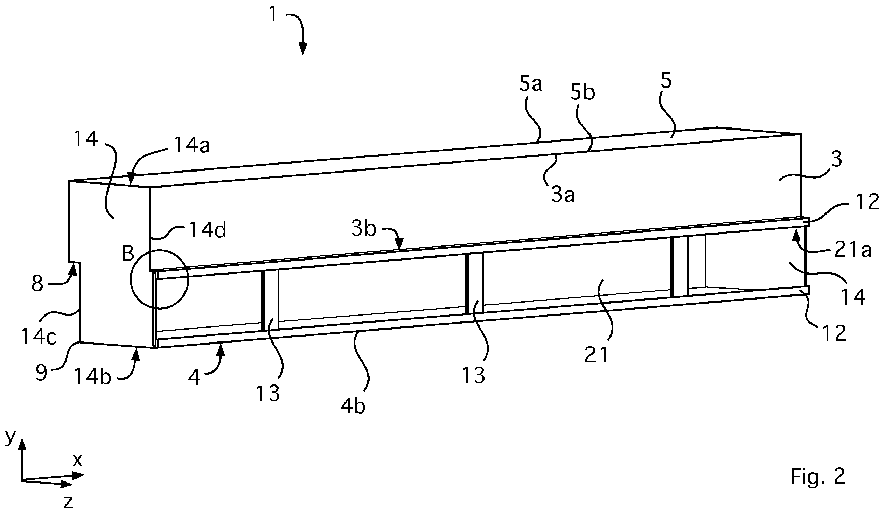

Zwischen dem Boden 4 und der Rückwand 3 ist eine Lufteintrittsöffnung 21 ausgebildet. Die Lufteintrittsöffnung 21 erstreckt sich dabei in Höhenrichtung y von der Hinterkante 4b des Bodens 4 bis in Höhe der Unterkante 3b der Rückwand 3. Die Hinterkante 5b der Decke 5 ist in Richtung der Vorderwand 2 versetzt zur Hinterkante 4b des Bodens 4 ausgebildet. Dabei ist die Lufteintrittsöffnung 21 nach oben durch einen dritten Steg 11 begrenzt, der sich in horizontaler Richtung von der Oberkante 21a der Lufteintrittsöffnung 21 bis zur Unterkante 3b der Rückwand 3 erstreckt. Die Oberkante 21a der Lufteintrittsöffnung 21 verläuft fluchtend zur Hinterkante 4b des Bodens 4. Die Hinterkante 4b des Bodens 4 bildet dabei die Unterkante der Lufteintrittsöffnung 21. Es insbesondere in Fig. 2 zu erkennen, dass sich die Lufteintrittsöffnung 21 und der dritte Steg 11 im Wesentlichen über die gesamte Länge des Bodens 4 und der Rückwand 3 erstrecken. Die Lufteintrittsöffnung 21 erstreckt sich in der Vertikalen.

Die Rückwand 3 erstreckt sich von ihrer Unterkante 3b bis zur Hinterkante 5b der Decke 5. Die Oberkante 3a der Rückwand liegt unter Ausbildung eines rechten Winkels an der Hinterkante 5b der Decke 5 an. Die Decke 5 erstreckt sich von ihrer Hinterkante 5b bis zu ihrer Vorderkante 5a.

Zwischen der Decke 5 und der Vorderwand 2 ist eine Luftaustrittsöffnung 22 ausgebildet. Die Luftaustrittsöffnung 22 erstreckt sich dabei in Höhenrichtung y von der Oberkante 2a der Vorderwand 2 zur Vorderkante 5a der Decke 5. Die Oberkante 2a der Vorderwand 2 bildet dabei die Unterkante der Luftaustrittsöffnung 22. Der erste Abschnitt 71 des Luftleitelementes 7 bildet die Oberkante der Luftaustrittsöffnung 22. Es ist insbesondere in Fig. 1 zu erkennen, dass sich die Luftaustrittsöffnung 22 im Wesentlichen über die gesamte Länge der Decke 5 und der Vorderwand 2 erstreckt. Die Luftaustrittsöffnung 22 erstreckt sich in der Vertikalen.

Der Abstand der Luftaustrittsöffnung 22 vom Boden 4 ist größer als die Ausdehnung der Lufteintrittsöffnung 21 vom Boden 4 in Richtung Decke 5. Das heißt mit anderen Worten, dass die Unterkante 3b der Rückwand 3 in Höhenrichtung y unterhalb der Oberkante 2a der Vorderwand 2 liegt. Aus diesem Grund kann Luft nicht in horizontaler Richtung von der Lufteintrittsöffnung 21 zur Luftaustrittsöffnung 22 strömen.

Von der Vorderkante 4a des Bodens 4 erstreckt sich die Vorderwand 2 bis zur Unterkante der Luftaustrittsöffnung 22. Dabei liegt die Vorderwand 2 mit ihrer Unterkante 2b an der Vorderkante 4a des Bodens 4 an.

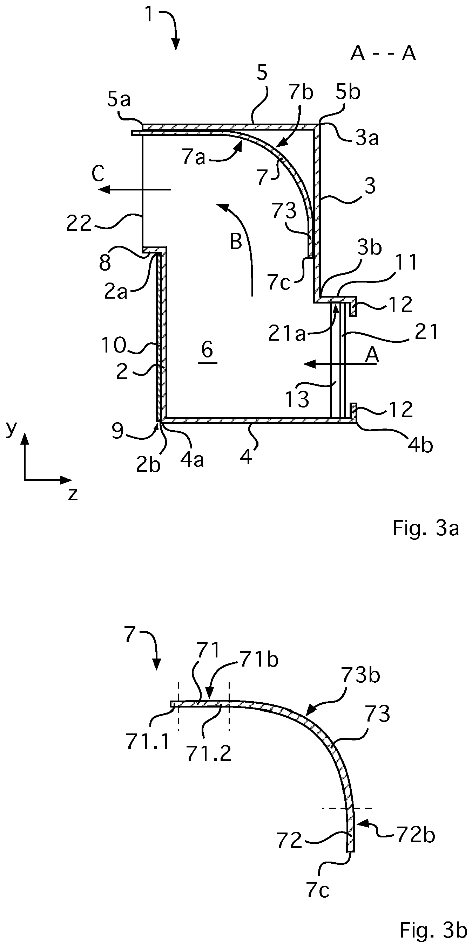

Im Innenraum 6 ist ein Luftleitelement 7 zum Leiten der an der Lufteintrittsöffnung 21 eintretenden Luft zur Luftaustrittsöffnung 22 angeordnet. Luft, die an der Lufteintrittsöffnung 21 in den Innenraum 6 des Luftauslasses 1 eintritt (Pfeil A in Fig. 3a), wird von dem Luftleitelement 7 zur Luftaustrittsöffnung 22 gelenkt (Pfeil B) und tritt an der Luftaustrittsöffnung 22 an dem Innenraum 6 aus. In der gezeigten Ausführungsform strömt die Luft von unten nach oben. In einer anderen, nicht gezeigten Ausführungsform ist der Luftauslass um 180° derart gedreht, dass sein Boden 4 die Oberseite des Luftauslasses und seine Decke 5 die Unterseite des Lufteinlasses bildet. In diesem Fall strömt die Luft von oben nach unten.

Das Luftleitelement 7 weist eine Unterkante 7c auf. An dieser Kante liegt das Luftleitelement 7 an der Innenseite der Rückwand 3 an. Es erstreckt sich von dort zur Innenseite der Decke 5.

Das Luftleitelement 7 weist eine Vorderseite 7a und eine Rückseite 7b auf (siehe Fig. 3b). Mit der Rückseite 7b liegt es an der Rückwand 3 und an der Decke 5 an. Die Vorderseite 7a des Luftleitelementes 7 ist gekrümmt, in diesem Beispiel um einen Winkel von 90°. Weil das Luftleitelement 7 als Luftleitblech ausgeführt ist, ist seine Rückseite 7b ebenfalls gekrümmt.

Das Luftleitelement 7 weist einen ersten Abschnitt 71, der mit seiner Rückseite 71b an der Innenseite der Decke 5 anliegt, einen zweiten Abschnitt 72, der mit seiner Rückseite 72b an der Innenseite der Rückwand 3 anliegt, und einen gekrümmten dritten Abschnitt 73, der den ersten Abschnitt 71 mit dem zweiten Abschnitt 72 verbindet, auf. Der erste Abschnitt 71 weist einen ersten Teilabschnitt 71.1 und einen zweiten Teilabschnitt 71.2 auf, wobei der erste Teilabschnitt 71.1 in horizontaler Richtung über die Decke 5 an deren Vorderkante 5a übersteht, während der zweite Teilabschnitt 71.2 mit seiner Rückseite an der Innenseite der Decke 5 anliegt. Der zweite Teilabschnitt 71.2 liegt zwischen dem ersten Teilabschnitt 71.1 und dem dritten Abschnitt 73. Der zweite Abschnitt 72 weist die Unterkante 7c auf. Von der Unterkante 7c erstreckt sich der zweite Abschnitt 72 an der Innenseite der Rückwand 3 in Richtung der Decke 5. Die Unterkante 7c ist von der Unterkante 3b der Rückwand 3 und damit von der Oberkante 21a der Lufteintrittsöffnung 21 beabstandet.

Die Außenseite der Vorderwand 2 weist einen putzhaltenden Bereich auf. Der putzhaltende Bereich ist mit einem Putzträgergewebe 10 bedeckt. Der putzhaltende Bereich ist zwischen einem ersten horizontalen Steg 8 und einem zweiten horizontalen Steg 9 ausgebildet, die sich im Wesentlichen über die ganze Länge der Vorderwand 2 erstrecken. Der erste Steg 8 ist an der Oberkante 2a der Vorderwand 2 ausgebildet und erstreckt sich vom Innenraum 6 weg. Der zweite Steg 9 ist an der Unterkante 2b der Vorderwand 2 ausgebildet und erstreckt sich vom Innenraum 6 weg. Der erste Steg 8 und der zweite Steg 9 begrenzen den putzhaltenden Bereich.

An der Rückseite des Luftauslasses sind als Versteifungselemente dienende, vertikal verlaufende Streben 13 ausgebildet. Die Streben 13 sind voneinander beabstandet und erstrecken sich von der Hinterkante 4b des Bodens zum dritten Steg 11.

Die gezeigte Ausführungsform des Luftauslasses 1 weist Seitenwände 14 auf. Die Seitenwände begrenzen zusätzlich zur Vorderwand 2, zur Rückwand 3, zum Boden 4 und zur Decke 5 den Innenraum 6. Dabei sind die Innenseiten der Seitenwände 14 dem Innenraum zugewandt, ihre Außenseiten sind dem Innenraum abgewandt. Die Seitenwände 14 weisen jeweils eine vertikale Hinterkante 14d auf, die die Lufteintrittsöffnung 21 und die Rückwand 3 begrenzt, und eine Vorderkante 14c, die die Luftaustrittsöffnung 22 und die Vorderwand 2 begrenzt. Die Seitenwände 14 weisen ferner eine Unterkante 14b auf, die an den Boden 4 angrenzt, und eine Oberkante 14a auf, die an die Decke 5 angrenzt.

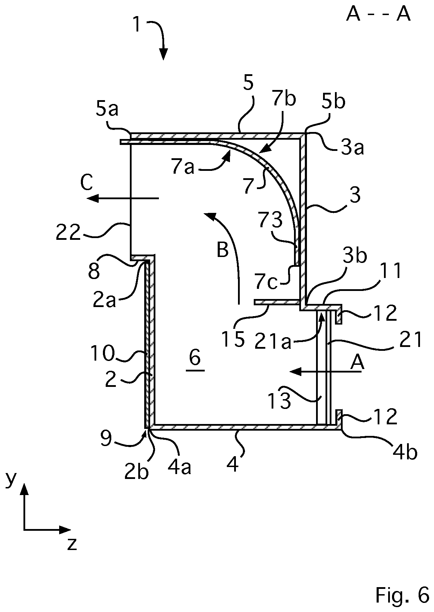

An der Oberkante und an der Unterkante der Lufteintrittsöffnung 21 sind Schienen 12 ausgebildet (siehe auch Fig. 6). Die Schienen 12 ermöglichen den Anschluss eines Lüftungsstutzens an den Luftauslass 1, so dass Luft aus dem Lüftungsstutzen in die Lufteintrittsöffnung 21 eintreten kann.

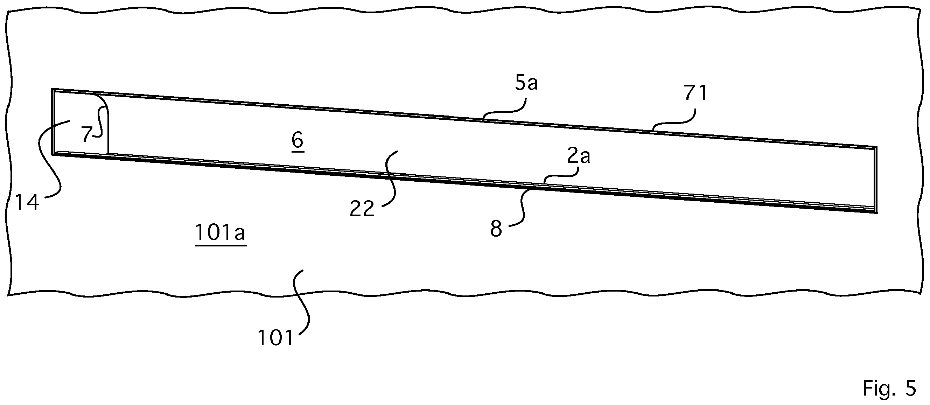

Fig. 5 zeigt eine Wand 101, in die die erste Ausführungsform des Luftauslasses 1 eingesetzt ist. Beim Blick auf die Außenseite 101a der Wand 101 ist die Luftaustrittsöffnung 22 zu erkennen. Auf die Außenseite der Vorderwand ist eine Putzschicht aufgetragen, so dass sie von der Außenseite 101a der Wand optisch nicht zu unterscheiden ist. Die Außenseiten der Seitenwände 14 und der Rückwand sowie die Lufteintrittsöffnung und der Boden sind nicht sichtbar.

Die in Fig. 6 gezeigte zweite Ausführungsform entspricht der ersten Ausführungsform, außer dass sie zusätzlich einen Sichtschutz 15 aufweist. Der Sichtschutz ist an der Innenseite der Rückwand 3 ausgebildet und erstreckt sich in horizontaler Richtung in den Innenraum 6, jedoch nicht bis zur Innenseite der Vorderwand 2. Der Sichtschutz 15 ist oberhalb der Unterkante 3b der Rückwand 3 angeordnet. In Höhenrichtung y liegt er jedoch unterhalb der Oberkante 2a der Vorderwand 2. Der Sichtschutz erstreckt sich über die gesamte Länge der Lufteintrittsöffnung 21 und der Rückwand 3. Er ist eine Platte oder ein Blech.

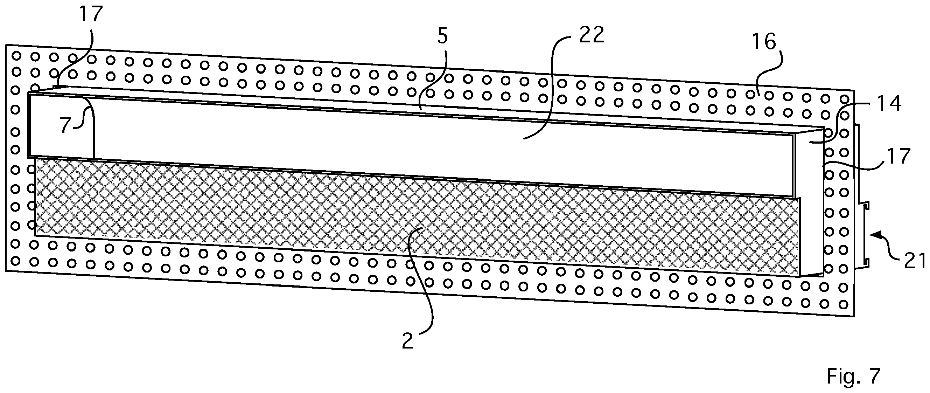

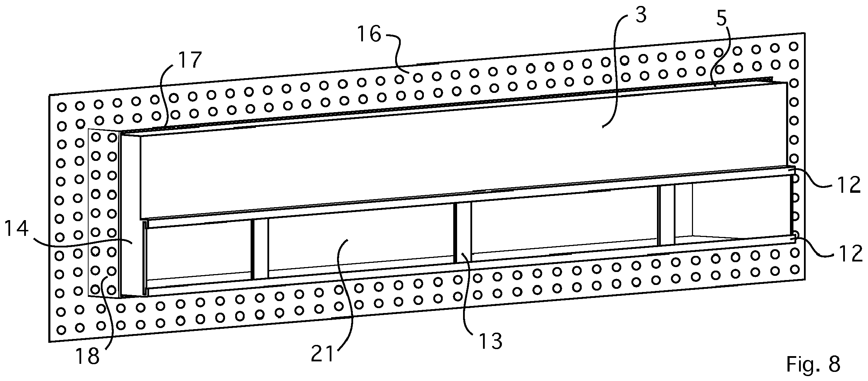

Die in den Figuren 7 und 8 gezeigte dritte Ausführungsform entspricht der ersten Ausführungsform, außer dass sie zusätzlich einen Rahmen 16 aufweist, der den Einbau des Luftauslasses in eine Wand erleichtert. Der Rahmen 16 weist eine Rahmenöffnung auf, deren Rand 17 an die Außenseiten des Bodens 4, der Decke 5 und der Seitenwände 14 angrenzt. Der Rahmen 16 weist Rahmenwandungen 18 auf, die die Rahmenöffnung begrenzen und an der Decke 5, dem Boden 4 und den Seitenwänden 14 anliegen. Der Rahmen weist ferner Rahmenstege 19 auf, die von den Rahmenwandungen 18 orthogonal abstehen.

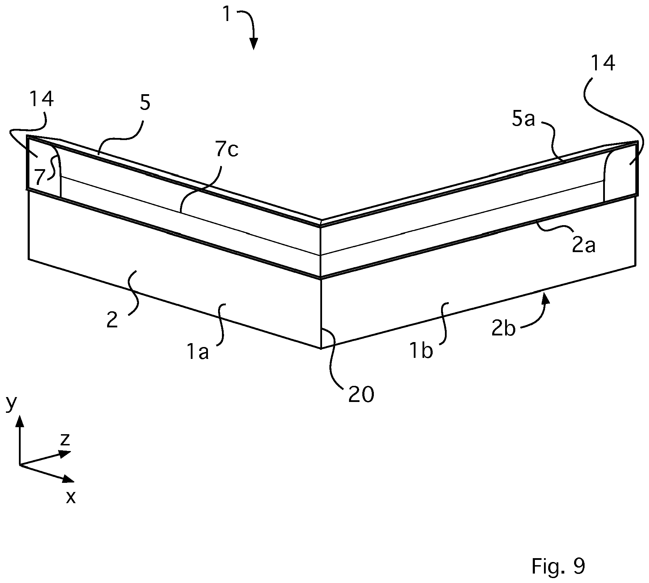

Die in Fig. 9 gezeigte vierte Ausführungsform entspricht der ersten Ausführungsform, außer dass der Luftauslass 1 aus zwei Segmenten 1a, 1b besteht. Die Segmente haben den gleichen Aufbau wie die erste Ausführungsform, außer dass sie jeweils nur eine Seitenwand 14 aufweisen und in einer vertikalen Anschlussebene unter Ausbildung einer Ecke 20, die in dieser Ebene liegt, miteinander verbunden sind.

An der Ecke 20 ist der Luftauslass in einem Winkel von 90° in der Horizontalen abgewinkelt. Er kann deshalb an Ecken zwischen Wänden eingesetzt werden. Die vierte Ausführungsform ist zum Einsatz in Außenecken von Wänden bestimmt. Weist der Luftauslass eine Abwickelung in entgegengesetzter Richtung auf, kann er in Innenecken von Wänden eingesetzt werden. Das zweite Segment 1b ist an dem ersten Segment 1a befestigt, ohne dass zwischen den Segmenten 1a, 1b ein Spalt ausgebildet ist. Zwischen den beiden Segmenten 1a, 1b ist keine Seitenwand ausgebildet. Das erste Segment 1a ist mit dem zweiten Segment derart verbunden, dass die Vorderwände 2, die Rückwände 3, die Böden 4, die Decken 5, die Lufteintrittsöffnungen 21 und die Luftaustrittsöffnungen 22 in der Abschlussebene jeweils aneinander grenzen. Zwischen den beiden Lufteintrittsöffnungen 21 und den beiden Luftaustrittsöffnungen 22 sind keine vertikalen Versteifungselemente ausgebildet. Die beiden Lufteintrittsöffnungen 21 gehen ohne Unterbrechung ineinander über. Ebenso gehen die beiden Lufteintrittsöffnungen 22 ohne Unterbrechung ineinander über.

Auch die vierte Ausführungsform kann zusätzlich einen Rahmen (nicht gezeigt) aufweisen, wie er im Zusammenhang mit den Fig. 7 und 8 beschrieben ist. Der Rahmen kann dazu ein erstes Rahmen-Segment mit einer ersten Teilöffnung und zweites Rahmen-Segment mit einer zweiten Teilöffnung aufweisen. Dabei grenzt die erste Teilöffnung des ersten Rahmen-Segmentes an das erste Segment 1a des Luftauslasses und die zweite Teilöffnung des zweiten Rahmen-Segmentes an das zweite Segment 1b des Luftauslasses an.

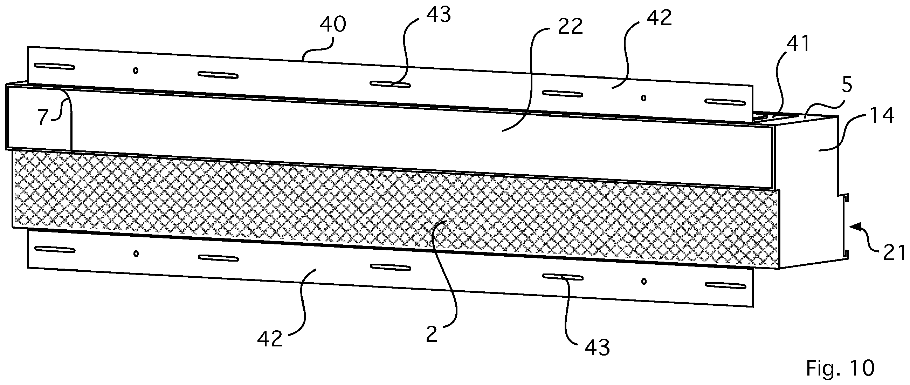

Die in Figur 10 gezeigte fünfte Ausführungsform entspricht der dritten Ausführungsform, außer dass sie statt eines Rahmens 16 Winkelelemente 40 aufweist, die den Einbau des Luftauslasses in einer Wandöffnung oder einer Ausnehmung in einer Wand erleichtert. Die Winkelelemente 40 sind mit jeweils einem Schenkel 41 eines Winkelelementes an den Boden und die Decke mittels Schrauben durch Langlöcher 43 geschraubt. Die Langlöcher ermöglichen eine leichte Anpassung vor Ort an die jeweiligen Wandstärken und/oder eventuelle Unebenheiten der Wand. Mit dem jeweiligen anderen Schenkel 42 werden die Winkelelemente 40 dann mit der Wand verklebt, verputzt oder verschraubt. In Figur 10 sind die Schenkel 42 mit einfachen Löchern und auch Langlöchern 43 versehen, um den Einbau weiter zu erleichtern.

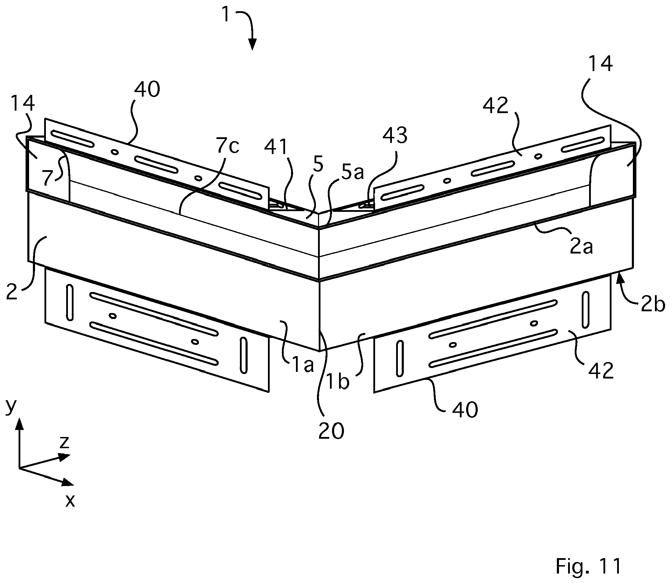

Die in Fig. 11 gezeigte sechste Ausführungsform entspricht der vierten Ausführungsform, außer dass für den Einbau des Luftauslasses in einer Wandöffnung oder einer Ausnehmung in einer Wand ebenso die Winkelelemente 40 der fünften Ausführungsform vorgesehen sind.

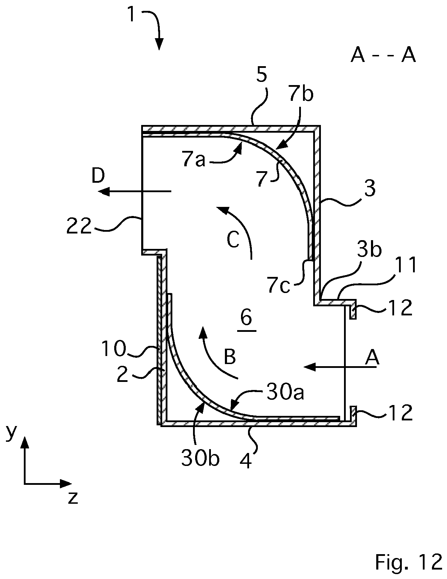

Die in Fig. 12 gezeigte siebente Ausführungsform entspricht der ersten Ausführungsform, außer dass im Innenraum 6 zusätzlich zum Luftleitelement 7 ein weiteres Luftleitelement 30 zum weiter verbesserten Leiten der an der Lufteintrittsöffnung 21 eintretenden Luft zur Luftaustrittsöffnung 22 angeordnet ist. Luft, die an der Lufteintrittsöffnung 21 in den Innenraum 6 des Luftauslasses 1 eintritt (Pfeil A in Fig. 12), wird zunächst von dem Luftleitelement 30 (Pfeil B) zum Luftleitblech 7 und von dort zur Luftaustrittsöffnung 22 gelenkt (Pfeil C) und tritt an der Luftaustrittsöffnung 22 an dem Innenraum 6 (Pfeil D) aus. Das Luftleitelement 30 weist eine Vorderseite 30a und eine Rückseite 30b auf (siehe Fig. 12). Mit der Rückseite 30b liegt es an der Vorderwand 2 und dem Boden 4 an. Die Vorderseite 30a des Luftleitelementes 30 ist ebenso in einem Winkel von 90° gekrümmt. Weil das Luftleitelement 30 als Luftleitblech ausgeführt ist, ist seine Rückseite 30b ebenfalls gekrümmt. In der gezeigten Ausführungsform strömt die Luft von unten nach oben. In einer anderen, nicht gezeigten Ausführungsform ist der Luftauslass um 180° derart gedreht, dass sein Boden 4 die Oberseite des Luftauslasses und seine Decke 5 die Unterseite des Lufteinlasses bildet. In diesem Fall strömt die Luft von oben nach unten.

### Bezugszeichenliste

- 1: Luftauslass
- 1a: Segment
- 1b: Segment
- 2: Vorderwand
- 2a: Oberkante
- 2b: Unterkante
- 3: Rückwand
- 3a: Oberkante
- 3b: Unterkante
- 4: Boden
- 4a: Vorderkante
- 4b: Hinterkante
- 5: Decke
- 5a: Vorderkante
- 5b: Hinterkante
- 6: Innenraum
- 7: Luftleitelement
- 7a: Vorderseite
- 7b: Rückseite
- 7c: Unterkante
- 8: erster Steg
- 9: zweiter Steg
- 10: Putzträgergewebe
- 11: dritter Steg
- 12: Schiene
- 13: Strebe
- 14: Seitenwand
- 14a: Oberkante
- 14b: Unterkante
- 14c: Vorderkante
- 14d: Hinterkante
- 15: Sichtschutz
- 16: Rahmen
- 17: Rand
- 18: Rahmenwandung
- 19: Rahmensteg
- 20: Ecke

- 21: Lufteintrittsöffnung
- 21a: Oberkante der Lufteintrittsöffnung
- 22: Luftaustrittsöffnung

- 30: Luftleitelement

- 40: Winkelelement
- 41: Schenkel
- 42: Schenkel
- 43: Langloch

- 71: erster Abschnitt
- 71b: Rückseite
- 71.1: erster Teilabschnitt
- 71.2: zweiter Teilabschnitt
- 72: zweiter Abschnitt
- 72b: Rückseite
- 73: dritter Abschnitt
- 73b: Rückseite

- 101: Wand
- 101a: Außenseite

## Patentansprüche

1. Luftauslass (1), aufweisend eine Vorderwand (2), eine Rückwand (3), einen Boden (4) und eine Decke (5), die einen Innenraum (6) begrenzen, wobei zwischen dem Boden (4) und der Rückwand (3) eine Lufteintrittsöffnung (21) ausgebildet ist und zwischen der Decke (5) und der Vorderwand (2) eine Luftaustrittsöffnung (22) ausgebildet ist, wobei der Abstand der Luftaustrittsöffnung (22) vom Boden (4) größer als die Ausdehnung der Lufteintrittsöffnung (21) vom Boden (4) in Richtung Decke (5) ist und wobei in dem Innenraum (6) ein Luftleitelement (7) zum Leiten der an der Lufteintrittsöffnung (21) eintretenden Luft zur Luftaustrittsöffnung (22) angeordnet ist.

2. Luftauslass nach Anspruch 1, **dadurch gekennzeichnet, dass** das Luftleitelement (7) eine Vorderseite (7a) und eine Rückseite (7b) aufweist, wobei es mit seiner Rückseite (7b) an der Rückwand (3) und an der Decke (5) anliegt.

3. Luftauslass nach Anspruch 1 oder Anspruch 2, **dadurch gekennzeichnet, dass** das Luftleitelement (7) oder seine Vorderseite (7a) konkav gewölbt ist.

4. Luftauslass nach einem der Ansprüche 1 bis 3, **dadurch gekennzeichnet, dass** in dem Innenraum (6) ein weiteres Luftleitelement (30) zum Leiten der an der Lufteintrittsöffnung (21) eintretenden Luft zur Luftaustrittsöffnung (22) angeordnet ist, das eine Vorderseite (30a) und eine Rückseite (30b) aufweist, wobei es mit seiner Rückseite (30b) an der Vorderwand (2) und am Boden (4) anliegt.

5. Luftauslass nach Anspruch 4, **dadurch gekennzeichnet, dass** das Luftleitelement (30) oder seine Vorderseite (30a) konvex gewölbt ist.

6. Luftauslass nach einem der vorstehenden Ansprüche, **dadurch gekennzeichnet, dass** an der Oberkante (2a) der Vorderwand (2) ein erster Steg (8) und an der Unterkante (2b) der Vorderwand (2) ein zweiter Steg (9) ausgebildet sind, die sich vom Innenraum (6) weg erstrecken.

7. Luftauslass nach einem der vorstehenden Ansprüche, **dadurch gekennzeichnet, dass** die Außenseite der Vorderwand (2), die dem Innenraum (6) abgewandt ist, einen putzhaltenden Bereich aufweist, der zwischen dem ersten Steg (8) und dem zweiten Steg (9) ausgebildet ist

8. Luftauslass nach Anspruch 7, **dadurch gekennzeichnet, dass** auf die Außenseite der Vorderwand (2) im putzhaltenden Bereich ein putzhaltendes Material (10) aufgebracht ist.

9. Luftauslass nach Anspruch 8, **dadurch gekennzeichnet, dass** es sich bei dem putzhaltenden Material (10) um ein Streckmetallgeflecht, ein Drahtgeflecht oder ein Metallgitter handelt.

10. Luftauslass nach einem der vorstehenden Ansprüche, **dadurch gekennzeichnet, dass** die Hinterkante (5b) der Decke (5) in Richtung der Vorderwand (2) versetzt zur Hinterkante (4b) des Bodens (4) ausgebildet ist, wobei die Lufteintrittsöffnung (21) nach oben durch einen dritten Steg (11) begrenzt ist, der sich von der Oberkante (21a) der Lufteintrittsöffnung (21) bis zur Unterkante (3b) der Rückwand (3) erstreckt.

11. Luftauslass nach Anspruch 10, **dadurch gekennzeichnet, dass** die Oberkante (21a) der Lufteintrittsöffnung (21) fluchtend zur Hinterkante (4b) des Bodens (4) verläuft.

12. Luftauslass nach einem der vorstehenden Ansprüche, **dadurch gekennzeichnet, dass** er Seitenwände (14) aufweist, wobei die Seitenwände (14) jeweils eine Hinterkante (14d) aufweisen, die die Lufteintrittsöffnung (21) begrenzt, und eine Vorderkante (14c), die die Luftaustrittsöffnung (22) begrenzt.

13. Luftauslass nach einem der vorstehenden Ansprüche, **dadurch gekennzeichnet, dass** er am Boden (4) und/oder an der Decke (5) Winkelelemente 40 zum Einbau in einer Wandöffnung oder einer Ausnehmung in der Wand (101) aufweist.

14. Wand (101), die eine Wandöffnung oder eine Ausnehmung aufweist und die ferner einen Luftauslass (1) gemäß einem der Ansprüche 1 bis 13 aufweist, wobei der Luftauslass (1) in der Wandöffnung oder der Ausnehmung angeordnet ist.

15. Heizvorrichtung, aufweisend eine Wand (101) mit einer Wandöffnung oder einer Ausnehmung, wobei in der Wandöffnung oder in der Ausnehmung ein Luftauslass (1) gemäß einem der Ansprüche 1 bis 13 angeordnet ist.
